## Europäisches Patentamt

## European Patent Office

## Office européen des brevets

(19)

(11) **EP 1 458 597 B1**

(12) **EUROPÄISCHE PATENTSCHRIFT**

(45) Veröffentlichungstag und Bekanntmachung des Hinweises auf die Patenterteilung:
**11.10.2006 Patentblatt 2006/41**

(21) Anmeldenummer: **02777338.1**

(22) Anmeldetag: **31.10.2002**

(51) Int Cl.:
**B60S 1/08** (2006.01)

(86) Internationale Anmeldenummer:
**PCT/EP2002/012200**

(87) Internationale Veröffentlichungsnummer:
**WO 2003/051694 (26.06.2003 Gazette 2003/26)**

(54) **VERFAHREN UND VORRICHTUNG ZUM STEUERN DES WISCHERS EINER SCHEIBE EINES KRAFTFAHRZEUGS**

METHOD AND DEVICE FOR CONTROLLING THE WIPER OF A MOTOR VEHICLE WINDOW

PROCEDE ET DISPOSITIF POUR PILOTER L'ESSUIE-GLACE D'UNE VITRE D'AUTOMOBILE

(84) Benannte Vertragsstaaten:
**CZ DE ES FR GB IT**

(30) Priorität: **14.12.2001 DE 10161582**

(43) Veröffentlichungstag der Anmeldung:
**22.09.2004 Patentblatt 2004/39**

(73) Patentinhaber: **Volkswagen Aktiengesellschaft
38436 Wolfsburg (DE)**

(72) Erfinder:
• **BUSSE, Carsten
  38444 Wolfsburg (DE)**
• **LINGEMANN, Bernd
  38531 Rötgesbüttel (DE)**

• **FANGMEIER, Wilhelm
  38442 Wolfsburg (DE)**

(74) Vertreter: **Meyer, Enno et al
  Augsburger Strasse 24
  82110 Germering (DE)**

(56) Entgegenhaltungen:
  **EP-A- 1 010 594        DE-A- 3 208 121
  US-A- 4 866 357        US-A- 6 150 783**

• **PATENT ABSTRACTS OF JAPAN vol. 1996, no. 05, 31. Mai 1996 (1996-05-31) & JP 08 020311 A (DAIHATSU MOTOR CO LTD), 23. Januar 1996 (1996-01-23)**

**Beschreibung**

Die Erfindung betrifft ein Verfahren zum Steuern des Wischers einer Scheibe eines Kraftfahrzeugs nach dem Oberbegriff des Anspruchs 1 bzw. 9.

Wischvorrichtungen zum Wischen benetzter Scheiben sind bekannt und gehören zur Standardausrüstung eines Kraftfahrzeugs. Heutige Wischvorrichtungen weisen eine Reihe von Steuerungsmerkmalen auf, die einerseits den Bedienungskomfort erhöhen und andererseits den Betrieb der Wischvorrichtung an die Umgebungsbegebenheiten, wie beispielsweise heftiger Regen, normaler Regen, geringer Regen, Sprühnässe von der Fahrbahn etc., anpassen sollen. So gehören eine Intervallschaltung sowie eine zweistufige Wischergeschwindigkeit zum Standard von Wischvorrichtungen heutiger Kraftfahrzeuge. Mittlerweile ist es üblich, die zeitlichen Intervalle des Intervallbetriebs der Wischvorrichtung entweder vom Fahrer einstellen und/oder durch die Bestimmung des Benetzungsgrades der jeweiligen Scheibe von einer Steuerung festlegen zu lassen.

Aus beispielsweise DE-A-40 33 332 sind Wischsysteme bekannt, die mit einem Regen- und Feuchtigkeitssensor ausgestattet sind, wobei der Wischerantrieb entsprechend der ermittelten Regenheftigkeit und der ermittelten Feuchtigkeit gesteuert wird.

Ferner ist aus EP-A-1 010 594 ein Wischsystem für ein Kraftfahrzeug bekannt, bei dem die Reibung zwischen dem Wischerblatt und der Scheibe des Kraftfahrzeugs durch eine geeigneten Sensor bestimmt wird. Da die Reibung ein Maß für die auf der Scheibe befindliche Flüssigkeit ist, wird aus dieser Information die zur optimalen Reinigung der Scheibe notwendige Wischerfrequenz bestimmt. Der Reibungswert kann dabei aus dem vom Wischermotor aufgenommenen Strom abgeleitet werden.

Ein weiteres Problem bei Wischsystemen für Kraftfahrzeuge ist das Auftreten von sogenanntem Wischblattrattern, d.h. der Wischer fährt nicht gleichmäßig über die Scheibenfläche, sondern der Wischer fährt ruckartig über die Fläche, wodurch Streifen auf der Scheibe auftreten, die die Sicht des Fahrers behindern. Dieses Wischblattrattern wird allgemein durch Schwingungen des Wischerblatts in seitwärtiger Richtung verursacht, die durch eine Veränderung des Reibungskoeffizienten zwischen Wischblattgummi und Scheibe hervorgerufen wird. Die Ursachen einer Veränderung des Reibungskoeffizienten können vielfach sein, beispielsweise kann die Scheibe verunreinigt oder das Wischblattgummi gealtert sein.

Zur Unterdrückung derartigen Wischblattratterns offenbart EP-B-0 334 651 die Überlagerung der Wischblattbewegung mit einer weiteren hochfrequenten Schwingungen, um die Wiederholfrequenz zwischen Haften und Rutschen zu erhöhen. Allerdings wird zur Erzeugung der hochfrequenten Schwingung ein Oszillator benötigt, der auf dem Wischer, d.h. Wischerblatt oder Wischerarm, oder dem Wischerschaft angeordnet ist. Dadurch erhöht sich das Wischermasse und dem Wischer muß eine zusätzliche Spannung zugeführt werden.

US-A-615 0783 offenbart den Oberbegriff der Ansprüche 1 und 9.

Der Erfindung liegt daher die Aufgabe zugrunde, ein Verfahren zum Steuern eines Wischers einer Scheibe eines Kraftfahrzeugs, wobei der Wischer in Abhängigkeit von der Reibung zwischen Scheibe und Wischerblatt gesteuert wird, ohne das der Scheibenbenetzungsgrad sensiert wird und wobei ein Rattern des Wischers vermieden wird.

Diese Aufgabe wird durch ein Verfahren nach Anspruch 1 und ein Verfahren nach Anspruch 9 gelöst. Bevorzugte Ausgestaltungen der Erfindung sind Gegenstand der Unteransprüche.

Bei dem erfindungsgemäßen Verfahren zum Steuern eines Wischers einer Scheibe eines Kraftfahrzeugs, der einen Wischantrieb aufweist, welcher durch einen Zustandsvektor beschrieben wird, mit einem Eingangsvektor beaufschlagt wird und einen meßtechnisch erfaßbaren Ausgangsvektor erzeugt, wird ein zum Wischantrieb parallel angeordneter Systembeobachter mit dem Eingangsvektor beaufschlagt wird, wobei der Systembeobachter ein Modell des Wischantriebs darstellt, ermittelt der Systembeobachter aus dem Eingangsvektor einen rekonstruierten Ausgangsvektor des Wischantriebs, wird der reale Ausgangsvektor des Wischantriebs gemessen, wird und aus der Differenz des realen Ausgangsvektors und des rekonstruierten Ausgangsvektors der Eingangsvektor zur Steuerung des Wischantriebs abgeleitet.

Dabei enthält der Zustandsvektor enthält die zur Beschreibung des Wischantriebs notwendigen Zustandsgrößen, der Eingangsvektor die zur Ansteuerung des Wischantriebs notwendigen Eingangsgrößen und der Ausgangsvektor die meßbaren Ausgangsgrößen des Wischantriebs.

Der Systembeobachter ermittelt aus dem Eingangsvektor sowie der Differenz zwischen realem Ausgangsvektors und rekonstruiertem Ausgangsvektor einen rekonstruierten Zustandsvektor, aus dem der Eingangsvektor abgeleitet wird.

Eine Auswertung des rekonstruierten Zustandsvektors wird durchgeführt, wobei aus der Auswertung des rekonstruierten Zustandsvektors der Reibwerts zwischen Wischerblatt und Scheibe bestimmt werden kann. Ferner kann aus dem ermittelten Reibwert der Benetzungsgrad der Scheibe abgeleitet werden und in Abhängigkeit vom ermittelten Benetzungsgrad kann der Wischantrieb aktiviert werden. Letzteres bedeutet, daß als Funktion des ermittelten Benetzungsgrades der Wischantrieb in einer geeigneten Stufe Betrieb genommen wird, die Intervall bei einem Intervallbetrieb geeignet gewählt werden und die Wischgeschwindigkeit bzw. Wischfrequenz geeignet gewählt wird.

Aus der Auswertung des rekonstruierten Zustandsvektors werden Schwingungserscheinungen der Zustandsgrößen des Zustandsvektors bestimmt, wobei insbesondere aus den Schwingungserscheinungen der Zustandsgrößen abgeleitet wird, ob der Wischantrieb sich in einem idealen oder nichtidealen Zustand befindet. Vorzugsweise wird die Drehzahl des Wischantrieb variiert, falls sich der Wischantrieb in einem nicht idealen Zustand befindet. Insbesondere wird die Drehzahl des Wischantriebs solange variiert, bis sich ein Minimum der Schwingungserscheinungen in den Zustandsgrößen einstellt. Durch dies Auswertung und Steuerung des Wischantriebs kann ein Rattern des Wischers zumindest verringert bzw. vollständig vermieden werden

Vorzugsweise wird eine Meldung, beispielsweise optisch und/oder akustisch, an den Fahrer des Kraftfahrzeugs generiert, falls sich der Wischantrieb in einem nichtidealen Zustand befindet. Die Meldung wird insbesondere durch eine optische Anzeige bewirkt, die wieder erlischt, wenn sich der Wischantrieb wieder in einem idealen Zustand befindet.

Die Auswertungen hinsichtlich des Benetzungsgrades der Scheibe und der Rattererkennung können natürlich parallel in der Auswerteeinheit durchgeführt werden.

Bevorzugte Ausführungsformen der Erfindung werden nachfolgend anhand einer Zeichnung erläutert. Die Figur zeigt ein Prinzipschaltbild einer erfindungsgemäßen Wischvorrichtung mit Systembeobachter,

Die Figur zeigt eine erfindungsgemäßen Wischvorrichtung mit einer Regelungs- und Ansteuereinheit 1, die einen Eingangsvektor $\underline{u}$ erzeugt, der einen Wischantrieb 2 ansteuert. Der Wischantrieb 2 wird durch Zustandsgrößen, wie beispielsweise Motormoment, Motorstrom, Position, Drehzahl, Beschleunigung oder Beschleunigungsänderung, die einen Zustandsvektor $\underline{x}$ bilden, beschrieben. Auf den Wischantrieb 2 wirkt ein zeitlich veränderlicher Störvektor $\underline{z}(t)$. Dem Wischantrieb 2 nachfolgend angeordnet ist eine Meßeinrichtung 3, die einen Ausgangsvariablenvektor $\underline{y}$, beispielsweise die Position der Wischermotorabtriebswelle oder andere Ausgangsvariablen, ermittelt.

Parallel zum Wischantrieb ist ein Systembeobachter 4 angeordnet, der als Eingangsgröße ebenfalls mit dem Eingangsvektor $\underline{u}$ beaufschlagt wird. Der Systembeobachter 4 enthält eine Einrichtung 5 zum Berechnen eines rekonstruierten Zustandsvektors $\hat{\underline{x}}$, eine Einrichtung 6 zu Berechnung des zugehörigen rekonstruierten Ausgangsvektors $\hat{\underline{y}}$, einen Subtrahierer 7 zum Berechnen der Differenz $(\underline{y} - \hat{\underline{y}})$ aus gemessenen Ausgangsvektor $\underline{y}$ und rekonstruiertem Ausgangsvektor $\hat{\underline{y}}$ und eine Einrichtung 8 zur Berechnung eines Rückführvektors $\underline{r}$, der wiederum in die Berechnung 5 des rekonstruierten Zustandsvektors $\hat{\underline{x}}$ einfließt.

Der ermittelte rekonstruierte Zustandsvektor $\hat{\underline{x}}$ ist einerseits Eingabegröße für eine Auswerteeinheit 9 und für die Regelungs- und Ansteuereinheit 1. Nachfolgend der Auswerteeinheit 9 ist eine Einheit Wischmanagement 10 angeordnet.

Die Auswerteeinheit 9 dient in einer ersten Ausführungsform zur Rattererkennung, indem Schwingungserscheinungen der Zustandsgrößen detektiert werden und anhand dessen bewertet wird, ob ein idealer Betriebszustand oder ein nichtidealer Betriebszustand des Wischantriebs vorliegt. Ausgehend von der Bewertung gibt das Wischmanagement 10 die Drehzahl für den Wischantrieb 2 vor.

In einer zweiten Ausführungsform dient die Auswerteeinheit 9 zur Erkennung des Reibwertes zwischen Wischerblatt und Scheibe, wobei aus dem Reibwert auf den Benetzungsgrad der Scheibe geschlossen wird. Anhand des festgestellten Benetzungsgrades legt das Wischmanagement fest, ob der Wischer in Betrieb genommen wird, und wenn ja, in welcher Stufe und bei welcher Frequenz und/oder mit welchem Intervall.

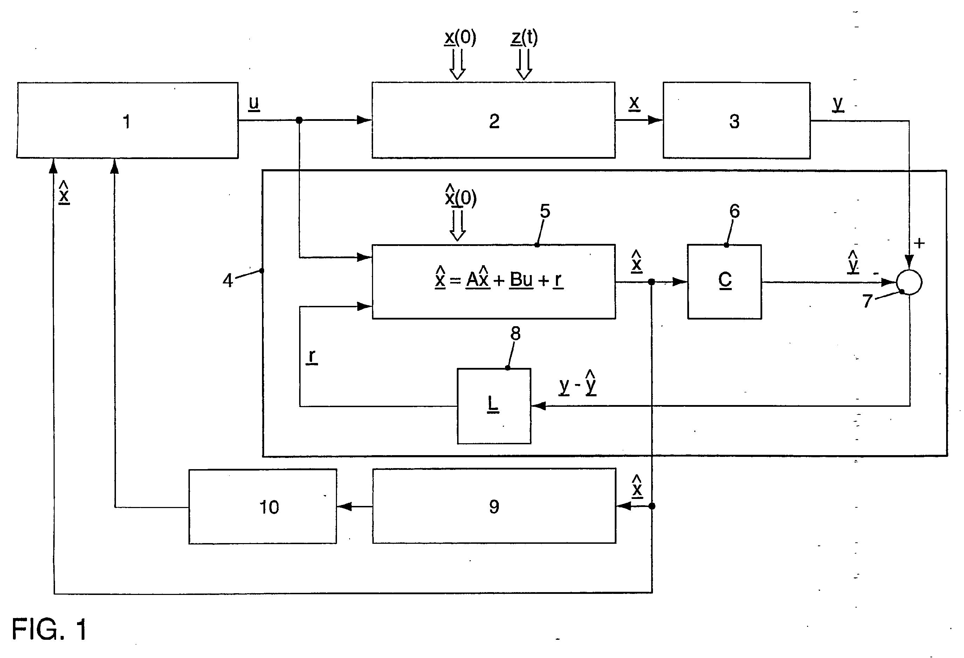

Im folgenden wird das durch die Vorrichtung nach Fig. 1 verkörperte Verfahren näher erläutert:

Der Erfindung liegt das Prinzip zugrunde, daß mit Hilfe eines mathematischen Modells des Wischantriebs die relevanten Systemzustandsgrößen, wie Position der Wischerabtriebswelle, Betriebsstrom des Wischermotors, Motormoment, Betriebsdrehzahl und Beschleunigung, im Systembeobachter 4 rekonstruiert werden. Anhand dieses rekonstruierten Zustandsvektors $\hat{\underline{x}}$ wird einerseits festgestellt ob die Wischervorrichtung sich in einem idealen oder nichtidealen Betriebszustand befindet, der sich optisch und akustisch durch "Rattern" bzw. durch Schwingungen der Wischerblätter auf der Fahrzeugverglasung bemerkbar macht. Wird der Ratter-Betriebszustand" erkannt, so wird die Betriebsdrehzahl des Wischermotors nach einem definiertem Ablauf variiert, bis durch die Rattererkennung eine Minderung oder Beseitigung des Rattereffektes eintritt. Andererseits wird der Benetzungsgrad der Scheibe aufgrund der Reibwerte festgestellt, so daß die Wischvorrichtung geeignet betrieben wird.

Der Systembeobachter 4, es handelt sich hier um einen Systembeobachter nach Luenberger oder Kalmann aus der Regelungstechnik, ist dem realen Wischantrieb 2 strukturell parallel geschaltet und erhält die gleiche Eingangsgröße $\underline{u}$ wie der Wischermotor. Durch den Vergleich der meßtechnisch erfaßten Ausgangsgröße $\underline{y}$ des Wischermotors, beispielsweise der Position der Wischermotorabtriebswelle, und der Systembeobachterausgangsgröße $\hat{\underline{y}}$, wird der gesamte Zustandsvektor $\hat{\underline{x}}$, der Motormoment, Motorstrom, Position, Drehzahl, Beschleunigung, Beschleunigungsänderung beinhaltet, des Wischantriebes 2 rekonstruiert.

Der Systembeobachters für die Erkennung von Störgrößen, die sich eindeutig in den Zustandsgrößen des Systems widerspiegeln, erzeugt "Schätzwerte" $\hat{\underline{x}}$ für die wahren Zustandsgrößen wie Drehzahl, Motormoment, Motorstrom, Beschleunigung, ohne die wahren Zustandsgrößen meßtechnisch zu erfassen Es wird daher ein mathematisches Modell des Wischantriebs realisiert, und mit den gleichen Eingangsgrößen wie die reale Strecke gespeist.

Man bildet daher aus dem Modellvektor, dem rekonstruierten Zustandsvektor $\hat{\underline{x}}$ den zugehörigen rekonstruierten

Ausgangsvektor $\hat{\underline{y}}$ = $\underline{C} \cdot \hat{\underline{x}}$, vergleicht diesen mit dem Meßvektor $\underline{y}$ des Wischantriebs 2 und führt die so entstehende Differenz über einen Matrixfaktor $\underline{L}$, der die Rolle einer Rückführmatrix einnimmt, auf das Modell zurück, so daß man eine Rückführung erhält. Die Rückführmatrix $\underline{L}$ ist so zu wählen, daß der sogenannte Schätzfehler $\tilde{\underline{x}}(t) = \underline{x}(t) - \hat{\underline{x}}(t)$ für $t \rightarrow + \infty$ gegen Null strebt.

Die im Systembeobachter 5 berechneten Gleichungen lauten wie folgt:

$$\dot{\hat{\underline{x}}} = \underline{A}\,\hat{\underline{x}} + \underline{B}\,\underline{u} + \underline{r} \qquad\qquad 1)$$

$$\underline{r} = \underline{L}\,(\underline{y} - \hat{\underline{y}}) \qquad\qquad 2)$$

$$\hat{\underline{y}} = \underline{C}\,\hat{\underline{x}} \qquad\qquad 3)$$

oder zusammengefaßt:

$$\dot{\hat{\underline{x}}} = (\underline{A} - \underline{LC})\,\hat{\underline{x}} + \underline{B}\,\underline{u} + \underline{L}\,\underline{y} \qquad\qquad 4)$$

Der Zustandsvektor $\hat{\underline{x}}$ wird anschließend in der Auswerteeinheit 9, die in diesem Fall als Rattererkennung wirkt, bewertet. Bei Detektion von Schwingungserscheinungen bzw. "Wischblattrattern" wird eine optimale Drehzahlvorgabe des Wischermotors in dem Wischermanagement 10 generiert und an die Regelungs- und Ansteuereinheit 1 des Wischerantriebs 2 übergeben. Die Drehzahlvorgabe bewirkt, daß die Schwingungen der Wischerblätter auf der Fahrzeugverglasung ein Minimum einnehmen. Durch den kontinuierlichen Vergleich von Modellausgangsgröße und gemessener Wischerausgangsgröße (Position der Wischermotorabtriebswelle) wird durch eine entsprechende Rückwirkung auf die Eingangsgröße (Sollwert) des Wischermotors, die Fahrzeugwischeinrichtung ständig im idealen Betriebszustand gehalten bzw. wird das Wischblattrattern verhindert.

Wirkt die Auswerteeinheit 9 als Rattererkennung, so besteht dabei die Rattererkennung im wesentlichen aus Filtereinrichtungen mit nachgeschalteter Schwellwerterkennung. Je nach Schärfe der Rattererscheinungen werden die Schwellwerte überschritten und das Rattern auf diese Weise katalogisiert.

Bei detektiertem Rattern wird in Abhängigkeit von der Ratterschärfe der Drehzahlsollwert für den Wischantrieb 2 variiert. Entscheidend hierbei ist, daß die Rattererscheinung in direktem Zusammenhang mit der Relativgeschwindigkeit des Wischblatts auf der Fahrzeugverglasung, und somit auch in direktem Zusammenhang mit der Drehzahl des Wischantriebs steht. Wird daher ein Rattern erkannt, so wird der Drehzahlsollwert für den Wischantrieb variiert bis sich ein Minimum der Schwingungserscheinungen in den Zustandsgrößen des Wischantriebs 2, wie Drehzahl, Strom, Moment, Beschleunigung usw., einstellt. Auf diese Weise wird gewährleistet, daß der Wischantrieb 2 bzgl. der Störgrößeneinwirkung mit dem Effekt des Ratterns ständig in einem optimalen Betriebszustand gehalten wird.

Der Systembeobachter 4 wird vorzugsweise per Software oder elektrische/elektronische schaltungstechnische Maßnahmen in die Ansteuer- und Regelungseinheit 1 des Wischerantriebs integriert. Die Wischeranlagenaktorik (Wischermotor) muß hierbei über eine Einrichtung zur Erfassung einer typischen Systemzustandsgröße (z.B. Position der Wischermotorabtriebswelle) verfügen. Anhand dieser einzigen meßtechnisch erfaßten Zustandsgröße werden alle anderen Systemzustandsgrößen durch den Systembeobachter rekonstruiert und stehen für regelungstechnische Maßnahmen bzgl. des Wischantriebs zur Verfügung.

Zur weiteren Verdeutlichung des Systembeobachters und seine Anwendung auf einen beispielhaften Wischantrieb kurz erläutert.

Ausgangspunkt ist ein permanent erregter Gleichstromantrieb, der über ein Gestänge das Wischblatt auf der Scheibe des Kraftfahrzeugs antreibt. Der Anker des Motors weist einen Ankerwiderstand $R_A$ und eine Ankerinduktivität

$L_A$ auf, wobei durch den Anker ein Ankerstrom $i_A(t)$ fließt. Der Anker dreht sich mit einer Winkelgeschwindigkeit $\omega(t)$ und die Ankerwellenposition wird $\varphi(t)$ beschrieben. Ferner fällt über dem Anker eine Ankerspannung $U_A(t)$ ab, der Motor muß zur Bewegung des Scheibenwischers ein Lastmoment $m_L(t)$ aufbringen, das Trägheitsmoment des Ankers ist $J$, die elektrische Motorkonstante ist $k_e$, die mechanische Motorkonstante ist $k_m$ und die geschwindigkeitsproportionale Dämpfungskonstante des Motors ist $k_d$.

Das mathematische Modell des Motors lautet dann in analoger Formulierung zu 1:

$$\begin{pmatrix} \dot{i}_A(t) \\ \dot{\omega}_A(t) \\ \dot{\varphi}_A(t) \end{pmatrix} = \begin{pmatrix} \dfrac{-R_A}{L_A} & \dfrac{-k_e}{L_A} & 0 \\ \dfrac{k_m}{J} & \dfrac{-k_d}{J} & 0 \\ 0 & 1 & 0 \end{pmatrix} \begin{pmatrix} i(t) \\ \omega(t) \\ \varphi(t) \end{pmatrix} + \begin{pmatrix} \dfrac{1}{L_A} \\ 0 \\ 0 \end{pmatrix} \bigl(U_A(t)\bigr) + \begin{pmatrix} 0 \\ \dfrac{1}{J} \\ 0 \end{pmatrix} m_L(t) \qquad 5)$$

Dieses Modell wird zur Formulierung des Beobachters verwendet, wobei der dritte Term der rechten Seite durch die Rückführung $\underline{L}\,(\underline{y} - \hat{\underline{y}})$ ersetzt wird, so daß sich die zu lösende Beobachtergleichung ergibt zu:

$$\begin{pmatrix} \dot{i}_A(t) \\ \dot{\omega}_A(t) \\ \dot{\varphi}_A(t) \end{pmatrix} = \begin{pmatrix} \dfrac{-R_A}{L_A} & \dfrac{-k_e}{L_A} & 0 \\ \dfrac{k_m}{J} & \dfrac{-k_d}{J} & 0 \\ 0 & 1 & 0 \end{pmatrix} \begin{pmatrix} i(t) \\ \omega(t) \\ \varphi(t) \end{pmatrix} + \begin{pmatrix} \dfrac{1}{L_A} \\ 0 \\ 0 \end{pmatrix} \bigl(U_A(t)\bigr) + \underline{L}(\underline{y}(t) - \hat{\underline{y}}(t)) \qquad 6)$$

Die Beobachtungs- oder Rückführmatrix $\underline{L}$ muß entsprechend den Randbedingungen so gewählt werden, daß sich der Beobachtungsfehler $(\underline{x}(t) - \hat{\underline{x}}(t))$ verkleinert.

**BEZUGSZEICHENLISTE**

| | |
|---|---|
| 1 | Regelungs- und Ansteuereinheit |
| 2 | Wischantrieb |
| 3 | Meßeinrichtung |
| 4 | Systembeobachter |
| 5 | Berechnung des rekonstruierten Zustandsvektor |
| 6 | Berechnung des rekonstruierten Ausgangsvektors |
| 7 | Subtrahierer |
| 8 | Berechnung des Rückführvektors |
| 9 | Auswerteeinheit |
| 10 | Wischmanagement |
| $\underline{x}$ | Zustandsvektor |
| $\underline{x}(0)$ | Anfangswert des Zustandsvektors |
| $\hat{\underline{x}}$ | rekonstruierter Zustandsvektor |
| $\hat{\underline{x}}(0)$ | Anfangswert des rekonstruierten Zustandsvektors |
| $\dot{\hat{\underline{x}}}$ | zeitliche Ableitung des Zustandsvektors |
| $\underline{y}$ | Ausgangsvektor |
| $\hat{\underline{y}}$ | rekonstruierter Ausgangsvektor |

| | |
|---|---|
| $z(t)$ | zeitabhängiger Störgrößenvektor |
| u | Eingangsvektor |
| A | Systemmatrix |
| B | Eingangsmatrix |
| C | Ausgangsmatrix |
| L | Beobachtungsmatrix |
| t | Zeit |
| J | Trägheitsmoment des Ankers |

**Patentansprüche**

1. Verfahren zum Steuern eines Wischers einer Scheibe eines Kraftfahrzeugs mit einem Wischantrieb (2), der durch einen Zustandsvektor beschrieben wird, mit einem Eingangsvektor beaufschlagt wird und einen meßtechnisch erfaßbaren Ausgangsvektor erzeugt, wobei
   ein zum Wischantrieb parallel angeordneter Systembeobachter (4) mit dem Eingangsvektor beaufschlagt wird, wobei der Systembeobachter (4) ein Modell des Wischantriebs (2) darstellt,
   der Systembeobachter (4) aus dem Eingangsvektor einen rekonstruierten Ausgangsvektor des Wischantriebs (2) ermittelt,
   der reale Ausgangsvektor des Wischantriebs gemessen wird, und
   aus der Differenz des realen Ausgangsvektors und des rekonstruierten Ausgangsvektors der Eingangsvektor zur Steuerung des Wischantriebs abgeleitet wird,
   der Systembeobachter (4) aus der Differenz zwischen realem Ausgangsvektors und rekonstruiertem Ausgangsvektor sowie dem Eingangsvektor einen rekonstruierten Zustandsvektor ermittelt, aus dem der Eingangsvektor abgeleitet wird.
   **dadurch gekennzeichnet, daß**
   eine Auswertung des rekonstruierten Zustandsvektors durchgeführt wird, aus der Schwingungserscheinungen der Zustandsgrößen des Zustandsvektors bestimmt werden.

2. Verfahren nach Anspruch 1, **dadurch gekennzeichnet, daß** aus der Auswertung des rekonstruierten Zustandsvektors der Reibwerts zwischen Wischerblatt und Scheibe bestimmt wird.

3. Verfahren nach Anspruch 2, **dadurch gekennzeichnet, daß** aus dem ermittelten Reibwert der Benetzungsgrad der Scheibe abgeleitet wird und in Abhängigkeit vom ermittelten Benetzungsgrad der Wischantrieb aktiviert wird.

4. Verfahren nach Anspruch 1, **dadurch gekennzeichnet, daß** aus den Schwingungserscheinungen der Zustandsgrößen abgeleitet wird, ob der Wischantrieb (2) sich in einem idealen oder nichtidealen Zustand befindet.

5. Verfahren nach Anspruch 4, **dadurch gekennzeichnet, daß** die Drehzahl des Wischantrieb (2) variiert wird, falls sich der Wischantrieb (2) in einem nicht idealen Zustand befindet.

6. Verfahren nach Anspruch 4 oder 5, **dadurch gekennzeichnet, daß** die Drehzahl des Wischantriebs (2) solange variiert wird, bis sich ein Minimum der Schwingungserscheinungen in den Zustandsgrößen einstellt.

7. Verfahren nach Anspruch 4, **dadurch gekennzeichnet, daß** eine Meldung an den Fahrer des Kraftfahrzeugs generiert wird, falls sich der Wischantrieb (2) in einem nichtidealen Zustand befindet.

8. Verfahren nach Anspruch 7, **dadurch gekennzeichnet, daß** die Meldung durch eine optische Anzeige bewirkt wird, die wieder erlischt, wenn sich der Wischantrieb (2) wieder in einem idealen Zustand befindet.

9. Verfahren zum Steuern eines Wischers einer Scheibe eines Kraftfahrzeugs mit einem Wischantrieb (2), der durch einen Zustandsvektor beschrieben wird, mit einem Eingangsvektor beaufschlagt wird und einen meßtechnisch erfaßbaren Ausgangsvektor erzeugt, wobei
   ein zum Wischantrieb parallel angeordneter Systembeobachter (4) mit dem Eingangsvektor beaufschlagt wird, wobei der Systembeobachter (4) ein Modell des Wischantriebs (2) darstellt,
   der Systembeobachter (4) aus dem Eingangsvektor einen rekonstruierten Ausgangsvektor des Wischantriebs (2) ermittelt,
   der reale Ausgangsvektor des Wischantriebs gemessen wird, und

aus der Differenz des realen Ausgangsvektors und des rekonstruierten Ausgangsvektors der Eingangsvektor zur Steuerung des Wischantriebs abgeleitet wird,
aus der Differenz zwischen realem Ausgangsvektors und rekonstruiertem Ausgangsvektor sowie dem Eingangsvektor einen rekonstruierten Zustandsvektor ermittelt, aus dem der Eingangsvektor abgeleitet wird.
**dadurch gekennzeichnet, daß**
eine Auswertung des rekonstruierten Zustandsvektors durchgeführt wird, aus der Reibwerts zwischen Wischerblatt und Scheibe bestimmt wird.

10. Verfahren nach Anspruch 9, **dadurch gekennzeichnet, daß** aus dem ermittelten Reibwert der Benetzungsgrad der Scheibe abgeleitet wird und in Abhängigkeit vom ermittelten Benetzungsgrad der Wischantrieb aktiviert wird.

11. Verfahren nach Anspruch 9 oder 10, **dadurch gekennzeichnet, daß** aus der Auswertung des rekonstruierten Zustandsvektors Schwingungserscheinungen der Zustandsgrößen des Zustandsvektors bestimmt werden.

12. Verfahren nach Anspruch 11, **dadurch gekennzeichnet, daß** aus den Schwingungserscheinungen der Zustandsgrößen abgeleitet wird, ob der Wischantrieb (2) sich in einem idealen oder nichtidealen Zustand befindet.

13. Verfahren nach Anspruch 11, **dadurch gekennzeichnet, daß** die Drehzahl des Wischantrieb (2) variiert wird, falls sich der Wischantrieb (2) in einem nicht idealen Zustand befindet.

14. Verfahren nach Anspruch 11, **dadurch gekennzeichnet, daß** die Drehzahl des Wischantriebs (2) solange variiert wird, bis sich ein Minimum der Schwingungserscheinungen in den Zustandsgrößen einstellt.

15. Verfahren nach Anspruch 11, **dadurch gekennzeichnet, daß** eine Meldung an den Fahrer des Kraftfahrzeugs generiert wird, falls sich der Wischantrieb (2) in einem nichtidealen Zustand befindet.

16. Verfahren nach Anspruch 11. **dadurch gekennzeichnet, daß** die Meldung durch eine optische Anzeige bewirkt wird, die wieder erlischt, wenn sich der Wischantrieb (2) wieder in einem idealen Zustand befindet.

**Claims**

1. Method for controlling a wiper of a motor vehicle window, having a wiper drive (2) which is described by a state vector, has an input vector applied to it and generates an output vector which can be sensed by measuring equipment, the input vector being applied to a system observer (4) which is arranged parallel to the wiper drive, the system observer (4) constituting a model of the wiper drive (2),
the system observer (4) determining a reconstructed output vector of the wiper drive (2) from the input vector,
the real output vector of the wiper drive being measured, and
the input vector for controlling the wiper drive being derived from the difference between the real output vector and the reconstructed output vector,
and the system observer (4) determining a reconstructed state vector from the difference between the real output vector and the reconstructed output vector, as well as the input vector, and the input vector being derived from said reconstructed state vector,
**characterized in that**
an evaluation of the reconstructed state vector is carried out and oscillation phenomena of the state variables of the state vector are determined from said evaluation.

2. Method according to Claim 1, **characterized in that** the coefficient of friction between the wiper blade and window is determined from the evaluation of the reconstructed state vector.

3. Method according to Claim 2, **characterized in that** the degree of wetting of the window is derived from the determined coefficient of friction, and the wiper drive is activated as a function of the determined degree of wetting.

4. Method according to Claim 1, **characterized in that** from the oscillation phenomena of the state variables it is inferred whether the wiper drive (2) is in an ideal or nonideal state.

5. Method according to Claim 4, **characterized in that** the rotational speed of the wiper drive (2) is varied if the wiper drive (2) is in a nonideal state.

6. Method according to Claim 4 or 5, **characterized in that** the rotational speed of the wiper drive (2) is varied until a minimum value of the oscillation phenomena in the state variables occurs.

7. Method according to Claim 4, **characterized in that** a message to the driver of the motor vehicle is generated if the wiper drive (2) is in a nonideal state.

8. Method according to Claim 7, **characterized in that** the message is brought about by means of a visual display which goes out again if the wiper drive (2) is in an ideal state again.

9. Method for controlling a wiper of a motor vehicle window, having a wiper drive (2) which is described by a state vector, has an input vector applied to it and generates an output vector which can be sensed by measuring equipment, the input vector being applied to a system observer (4) which is arranged parallel to the wiper drive, the system observer (4) constituting a model of the wiper drive (2),
the system observer (4) determining a reconstructed output vector of the wiper drive (2) from the input vector, the real output vector of the wiper drive being measured, and
the input vector for controlling the wiper drive being derived from the difference between the real output vector and the reconstructed output vector,
and determining a reconstructed state vector from the difference between the real output vector and the reconstructed output vector, as well as the input vector, from which reconstructed state vector the input vector is derived,
**characterized in that**
an evaluation of the reconstructed state vector is carried out and the coefficient of friction between the wiper blade and window is determined from said evaluation.

10. Method according to Claim 9, **characterized in that** the degree of wetting of the window is derived from the determined coefficient of friction, and the wiper drive is activated as a function of the determined degree of wetting.

11. Method according to Claim 9 or 10, **characterized in that** oscillation phenomena of the state variables of the state vector are determined from the evaluation of the reconstructed state vector.

12. Method according to Claim 11, **characterized in that** from the oscillation phenomena of the state variables it is inferred whether the wiper drive (2) is in an ideal or nonideal state.

13. Method according to Claim 11, **characterized in that** the rotational speed of the wiper drive (2) is varied if the wiper drive (2) is in a nonideal state.

14. Method according to Claim 11, **characterized in that** the rotational speed of the wiper drive (2) is varied until a minimum value of the oscillation phenomena in the state variables occurs.

15. Method according to Claim 11, **characterized in that** a message to the driver of the motor vehicle is generated if the wiper drive (2) is in a nonideal state.

16. Method according to Claim 11, **characterized in that** the message is brought about by means of a visual display which goes out again if the wiper drive (2) is in an ideal state again.

**Revendications**

1. Procédé pour commander un essuie-glace d'une vitre de véhicule automobile, comprenant un entraînement d'essuie-glace (2) qui est décrit par un vecteur d'état, qui est sollicité par un vecteur d'entrée et qui produit un vecteur de sortie détectable par une technique de mesure, dans lequel
un observateur du système (4) disposé parallèlement à l'entraînement d'essuie-glace est sollicité par le vecteur d'entrée, l'observateur du système (4) constituant un modèle de l'entraînement d'essuie-glace (2),
l'observateur du système (4) détecte à partir du vecteur d'entrée un vecteur de sortie reconstruit de l'entraînement d'essuie-glace (2),
le vecteur de sortie réel de l'entraînement d'essuie-glace est mesuré, et
à partir de la différence entre le vecteur de sortie réel et le vecteur de sortie reconstruit, le vecteur d'entrée est déduit pour la commande de l'entraînement d'essuie-glace,
l'observateur du système (4) détermine, à partir de la différence entre le vecteur de sortie réel et le vecteur de sortie reconstruit ainsi qu'à partir du vecteur d'entrée un vecteur d'état reconstruit, à partir duquel le vecteur d'entrée est déduit,

**caractérisé en ce que**

l'on effectue une analyse du vecteur d'état reconstruit, à partir de laquelle on détermine des phénomènes d'oscillation des valeurs d'état du vecteur d'état.

2. Procédé selon la revendication 1, **caractérisé en ce que** l'on détermine à partir de l'analyse du vecteur d'état reconstruit la valeur de frottement entre le patin d'essuie-glace et la vitre.

3. Procédé selon la revendication 2, **caractérisé en ce que** l'on déduit à partir de la valeur de frottement le degré de mouillage de la vitre et on active l'entraînement d'essuie-glace en fonction du degré de mouillage détecté.

4. Procédé selon la revendication 1, **caractérisé en ce que** l'on déduit des phénomènes d'oscillation des valeurs d'état si l'entraînement d'essuie-glace (2) se trouve dans un état idéal ou non idéal.

5. Procédé selon la revendication 4, **caractérisé en ce que** la vitesse de rotation de l'entraînement d'essuie-glace (2) est modifiée si l'entraînement d'essuie-glace (2) se trouve dans un état non idéal.

6. Procédé selon la revendication 4 ou 5, **caractérisé en ce que** la vitesse de rotation de l'entraînement d'essuie-glace (2) est modifiée jusqu'à ce qu'un minimum de phénomènes d'oscillations des valeurs d'état s'établisse.

7. Procédé selon la revendication 4, **caractérisé en ce qu'**une information au conducteur du véhicule automobile est produite si l'entraînement d'essuie-glace (2) se trouve dans un état non idéal.

8. Procédé selon la revendication 7, **caractérisé en ce que** l'information est fournie par un affichage optique, qui s'éteint à nouveau si l'entraînement d'essuie-glace (2) se trouve à nouveau dans un état idéal.

9. Procédé de commande d'un essuie-glace d'une vitre de véhicule automobile comprenant un entraînement d'essuie-glace (2) qui est décrit par un vecteur d'état, qui est sollicité par un vecteur d'entrée et qui produit un vecteur de sortie détectable par une technique de mesure, dans lequel

un observateur du système (4) disposé parallèlement à l'entraînement d'essuie-glace est sollicité par le vecteur d'entrée, l'observateur du système (4) constituant un modèle de l'entraînement d'essuie-glace (2),

l'observateur du système (4) détecte à partir du vecteur d'entrée un vecteur de sortie reconstruit de l'entraînement d'essuie-glace (2),

le vecteur de sortie réel de l'entraînement d'essuie-glace est mesuré, et

à partir de la différence entre le vecteur de sortie réel et le vecteur de sortie reconstruit, le vecteur d'entrée est déduit pour la commande de l'entraînement d'essuie-glace,

et à partir de la différence entre le vecteur de sortie réel et le vecteur de sortie reconstruit ainsi qu'à partir du vecteur d'entrée, un vecteur d'état reconstruit est déterminé, à partir duquel le vecteur d'entrée est déduit,

**caractérisé en ce que**

l'on effectue une analyse du vecteur d'état reconstruit à partir de la valeur de frottement entre le patin d'essuie-glace et la vitre.

10. Procédé selon la revendication 9, **caractérisé en ce que** l'on déduit de la valeur de frottement détectée le degré de mouillage de la vitre et l'on active l'entraînement d'essuie-glace en fonction du degré de mouillage détecté.

11. Procédé selon la revendication 9 ou 10, **caractérisé en ce que** l'on détermine les phénomènes d'oscillations des valeurs d'état du vecteur d'état à partir de l'analyse du vecteur d'état reconstruit.

12. Procédé selon la revendication 11, **caractérisé en ce que** l'on déduit des phénomènes d'oscillations des valeurs d'état si l'entraînement d'essuie-glace (2) se trouve dans un état idéal ou non idéal.

13. Procédé selon la revendication 11, **caractérisé en ce que** la vitesse de rotation de l'entraînement d'essuie-glace (2) est modifiée si l'entraînement d'essuie-glace (2) se trouve dans un état non idéal.

14. Procédé selon la revendication 11, **caractérisé en ce que** la vitesse de rotation de l'entraînement d'essuie-glace (2) est modifiée jusqu'à ce qu'un minimum de phénomènes d'oscillations des valeurs d'état s'établisse.

**15.** Procédé selon la revendication 11, **caractérisé en ce qu'**une information au conducteur du véhicule automobile est produite si l'entraînement d'essuie-glace (2) se trouve dans un état non idéal.

**16.** Procédé selon la revendication 11, **caractérisé en ce que** l'information est fournie par un affichage optique, qui s'éteint à nouveau si l'entraînement d'essuie-glace (2) se trouve à nouveau dans un état idéal.

FIG. 1